# EUROPEAN PATENT SPECIFICATION

(11) **EP 2 376 782 B1**
(45) Date of publication and mention of the grant of the patent: **24.08.2016**
(21) Application number: 09837646.0
(22) Date of filing: 09.11.2009
(51) Int. Cl.: F04B 39/00, F25B 1/02, F25B 31/02, F16C 32/04

(54) **RECIPROCATING COMPRESSOR AND REFRIGERATING MACHINE HAVING THE SAME**
KOLBENKOMPRESSOR UND KÄLTEMASCHINE DAMIT
COMPRESSEUR ALTERNATIF ET APPAREIL DE RÉFRIGÉRATION COMPRENANT CELUI-CI

(30) Priority: 07.01.2009 KR 20090001229
(43) Date of publication of application: 19.10.2011
(73) Proprietor: LG Electronics Inc., Seoul 07336 (KR)
(72) Inventor: CHO, Woong, Gyeongsangnam-Do 641-711 (KR); KIM, Kyeong-Ho, Gyeongsangnam-Do 641-711 (KR); KIM, Jin-Kook, Gyeongsangnam-Do 641-711 (KR)
(74) Representative: Ter Meer Steinmeister & Partner
(86) International application number: PCT/KR2009/006556
(87) International publication number: WO 2010/079885

(56) References cited:
- WO-A1-2005/098236
- WO-A1-2005/098236
- JP-A- 2008 185 023
- KR-A- 20050 121 103
- US-A- 5 268 608
- US-A- 5 268 608
- US-A1- 2001 013 735

## Description

### Technical Field

The present invention relates to a reciprocating compressor and a refrigerating (cooling) apparatus (machine) having the same, and more particularly, a reciprocating compressor having a magnet bearing installed at thrust surfaces between a cylinder block and a crank shaft, and a refrigerating apparatus having the same.

### Background Art

In general, a hermetic compressor is a compressor provided with a motor unit disposed in a hermetic container for generating a driving force, and a compression unit operated by receiving the driving force from the motor unit. The hermetic compressors may be categorized into a reciprocating type, a rotary type, a vane type and a scroll type according to the compression mechanism with respect to a refrigerant as a compressible fluid.

The reciprocating compressor is configured such that a crank shaft is coupled to a rotor of a motor unit, a connecting rod is coupled to the crankshaft of the motor unit and a piston is coupled to the connecting rod, so that the piston linearly reciprocates within a cylinder to thereby compress a refrigerant.

The reciprocating compressor is configured such that a shaft portion of a crank shaft is inserted into a cylinder block to be supported in a radial direction and simultaneously an eccentric mass portion is laid on the cylinder block to be supported in a shaft direction as well, thereby forming a journal bearing surface and a thrust bearing surface between the crank shaft and the cylinder block. Hence, how to reduce the frictional loss between the crank shaft and the cylinder block as much as possible acts as an important factor on enhancing energy efficiency of the compressor. To this end, an oil passage is formed at the crank shaft so that oil pumped from an oil feeder can evenly be supplied to each bearing surface via the oil passage.

However, the related art reciprocating compressor has limitation on the reduction of frictional loss due to the surface-contact of the thrust surfaces. Taking into account of this, a technology has recently been proposed in which magnets are installed at the thrust surfaces to prevent the contact between the thrust surfaces so as to minimize the frictional loss.
WO 2005/098236 A1 discloses a reciprocating compressor comprising the features of the preamble of claim 1. Here, first and second magnets are mounted to a crank shaft and a cylinder block, respectively, so as to form a magnetic bearing. The inner and outer diameters of both magnets are the same so that the first and second magnets facing each other completely in the shaft direction. Therefore, the crank shaft can be only supported in the axial or shaft direction by the magnetic bearing.
KR 2005-0121103 A discloses another reciprocating compressor having a driving motor, a crank shaft coupled to a rotor of the driving motor and inserted into a shaft accommodation hole of a cylinder block assembly. A magnetic bearing is disposed between the cylinder block assembly and the rotor. The first and second magnets which are facing each other in an axial or shaft direction having equal inner diameters whereas the outer diameter of the second magnet fixed to the rotor is larger than that of the first magnet fixed to the cylinder block assembly element. Thus, the rotor is only supported in the axial or shaft direction by the magnetic bearing.
US 5 268 608 A is concerned with a flywheel based energy storage and discloses a magnetic bearing assembly supporting a wheel on a shaft by means of magnetic shaft bearing supported by a radial flange portion of the shaft and by a plurality of magnetic shaft sleeves forming a radial bearing together with corresponding magnetic bearing sleeves on the shaft. Ring magnets mounted to the wheel or hub are facing the magnetic shaft bearing. The magnets of magnetic shaft bearing and ring magnets have substantially the same inner and outer diameter. To provide a certain amount of radial support of the wheel on the shaft in addition to the radial sleeve bearing the gap between the magnets of magnetic shaft bearing and the ring magnets is inclined against the radial direction of the wheel.

### Disclosure of Invention

### Technical Problem

However, in the reciprocating compressor in which the magnets are installed at the thrust surfaces so as to generate a repulsive force against each other, the magnets installed at both the thrust surfaces have almost the same diameter and are disposed to face each other with a predetermined interval in a shaft direction, accordingly the crank shaft can be supported by the magnetic force in the shaft direction without friction while not supported by the magnetic force in a radial direction.

### Solution to Problem

Therefore, to overcome the limitation of the related art reciprocating compressor, an object of the present invention is to provide a reciprocating compressor capable of supporting a crank shaft both in a shaft direction and in a radial direction by use of a magnetic force of magnets installed at the thrust surfaces, and a refrigerating apparatus having the same.
This object is achieved by the subject matter of claim 1.

A reciprocating compressor includes a cylinder block having a shaft accommodation hole to form a journal bearing surface, a crank shaft including a shaft portion inserted into the shaft accommodation hole of the cylinder block, and a plate-shaped extending portion extending from an outer circumferential surface of the shaft portion to be formed wider than the shaft accommodation hole of the cylinder block, and a magnet bearing including a first magnet installed at a thrust surface of a periphery of the shaft accommodation hole of the cylinder block, and a second magnet installed at a thrust surface corresponding to the thrust surface of the cylinder block, wherein the magnets of the magnet bearing are disposed to generate a repulsive force both in a shaft direction and in a radial direction.

Further, a refrigerating apparatus includes a compressor, a condenser connected to a discharge side of the compressor, an expansion apparatus connected to the condenser, and an evaporator connected to the expansion apparatus and to a suction side of the compressor, wherein the compressor is provided with a magnet bearing installed between a cylinder block and a crank shaft and configured to support the same both in a shaft direction and in a radial direction.

### Advantageous Effects of Invention

In the reciprocating compressor and a refrigerating apparatus having the same according to the present invention, a magnet bearing is inserted between facing surfaces of the cylinder block and the crank shaft and the magnet bearing generates a magnetic force both in the shaft direction and in the radial direction so as to support the crank shaft and the cylinder block in the shaft direction and the radial direction, thereby reducing a frictional loss due to an eccentric load of the crank shaft. Also, both magnets of the magnet bearing are disposed to overlap each other so as to prevent the increase in an input load due to the magnetic force between the magnets, thereby further enhancing energy efficiency ratio (EER) of the compressor.

### Brief Description of Drawings

FIG. 1 is a longitudinal sectional view showing an embodiment of a reciprocating compressor in accordance with the present invention;
FIG. 2 is a disassembled perspective view of a cylinder block, a crank shaft and a ball bearing in the reciprocating compressor of FIG. 1;
FIG. 3 is a longitudinal sectional view showing an assembled state of a magnet bearing according to FIG. 1;
FIG. 4 is an enlarged schematic view of the magnet bearing of FIG. 3;
FIG. 5 is a graph showing a comparison result of magnetic forces with respect to an overlapping distance of the magnet bearing according to FIG. 1;
FIG. 6 is a graph showing a comparison result of magnetic forces with respect to an interval in a radial direction of the magnet bearing according to FIG. 1;
FIG. 7 is a distribution view of magnetic lines of the magnet bearing according to FIG. 1;
FIG. 8 is a schematic view showing magnetic poles of the magnet bearing according to FIG. 7;
FIG. 9 is a table showing testing results of comparing input, cooling capacity and energy efficiency between the reciprocating compressor having the magnet bearing according to the present invention and a reciprocating compressor having the related art sliding-contact bearing;
FIG. 10 is a longitudinal sectional view showing another embodiment of the shape of magnets of the magnet bearing according to FIG. 1;
FIGS. 12 and 13 are longitudinal sectional views showing another embodiment of arranged positions of the magnets of the magnet bearing according to FIG. 1;
FIG. 14 is a longitudinal sectional view showing another embodiment of installed positions of the magnets of the magnet bearing according to FIG. 1; and
FIG. 15 is a schematic view showing an embodiment of a refrigerator having the reciprocating compressor in accordance with the present invention.

### Best Mode for Carrying out the Invention

Hereinafter, with reference to the accompanying drawings, description will be made in detail of a reciprocating compressor and a refrigerating apparatus having the same in accordance with embodiments of the present invention.

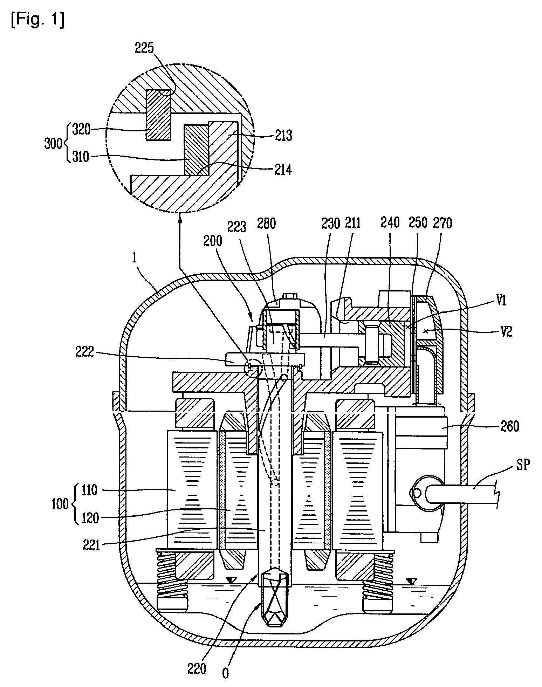

As shown in FIG. 1, a reciprocating compressor according to the present invention may include a motor unit 100 installed inside a hermetic container 1 and performing a rotation motion, and a compression unit 200 disposed above the motor unit 100 and compressing refrigerant by a rotational force received from the motor unit 100.

The motor unit 100 may be implemented as a constant-speed motor which is rotatable in a forward direction, a constant-speed motor which is rotatable both in forward and reverse direction, or an inverter motor. The motor unit 100 may include a stator 110 elastically installed in the hermetic container 1 with being supported by a cylinder block 210 to be explained later, and a rotor 120 rotatably installed inside the stator 110.

The compression part 200 may include a cylinder block 210 having a cylinder 211 forming a compression space and elastically supported by the hermetic container 1, a crank shaft 220 inserted into the cylinder block 210 to be supported in a radial direction and a shaft direction and coupled to the rotor 120 of the motor unit 100 for transferring a rotational force, a connecting rod 230 rotatably coupled to the crank shaft 220 for converting a rotation motion into a linear motion, a piston 240 rotatably coupled to the connecting rod 230 and linearly reciprocating within the cylinder 211 so as to compress a refrigerant, a valve assembly 250 coupled to an end of the cylinder block 210 and having a suction valve and a discharge valve, a suction muffler 260 coupled to a suction side of the valve assembly 250, a discharge cover 270 coupled to accommodate a discharge side of the valve assembly 250, and a discharge muffler 280 communicating with the discharge cover 270 for attenuating discharge noise of a discharged refrigerant.

With the configuration of the reciprocating compressor according to the present invention, when power is applied to the stator 110 of the motor unit 100, the rotor 120 is rotated with the crank shaft 220 by interaction with the stator 110, and the connecting rod 230 coupled to a cam portion 223 of the crank shaft 220 performs an orbiting motion. The piston 240 coupled to the connecting rod 230 then linearly reciprocates within the cylinder 211 to compress a refrigerant and discharges the compressed refrigerant via the discharge cover 270. The refrigerant discharged via the discharge cover 270 then flows into a refrigerating cycle via the discharge muffler 280. The series of processes are repeated.

Simultaneously, the crank shaft 220 is rotated in a state of being supported both in the radial and shaft directions so that the oil feeder O installed at a lower end of the crank shaft 220 pumps up oil contained in an oil storing unit. Such oil is sucked up via the oil passage of the crank shaft 220 so as to be supported to each bearing surface. Here, the oil is partially dispersed at the upper end of the crank shaft 220 so as to cool the motor unit 100.

Here, the crank shaft 220 may be inserted into a shaft accommodation hole 212 of the cylinder block 210 so as to be supported in a radial direction and simultaneously rotated in a state of being supported in the shaft direction and the radial direction by magnets disposed at facing surfaces in the shaft direction between the cylinder block 210 and the crank shaft 220. This configuration will now be described in detail.

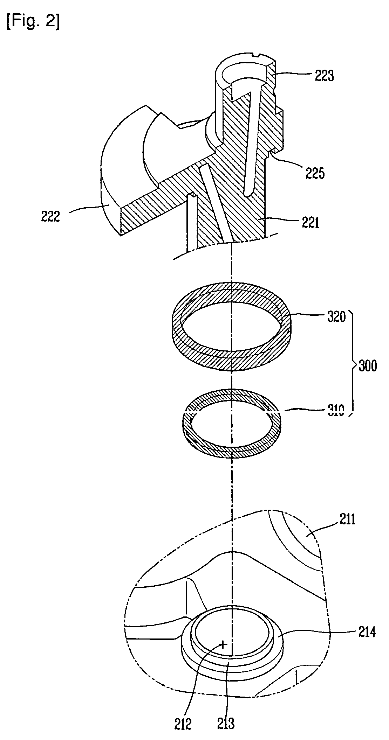

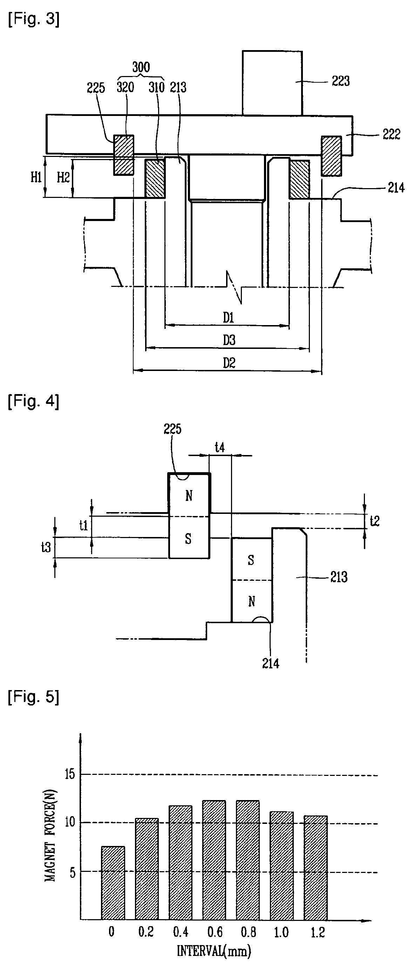

As shown in FIGS. 2 and 3, the shaft accommodation hole 212, which forms a journal bearing surface so that the crank shaft 220 is inserted therein so as to be supported in the radial direction, may be formed at a center of the cylinder block 210. A magnet bearing 300 may be installed between the periphery of the shaft accommodation hole 212 of the cylinder block 210 and the eccentric mass portion 222 of the crank shaft 220 so that the crank shaft 220 can be supported by the cylinder block 210 not only in the shaft direction but also in the radial direction due to a repulsive force generated by a magnetic force. That is, a first magnet 310 may be installed on an upper surface of the cylinder block 210 while a second magnet 320 may be installed on a lower surface of the eccentric mass portion 222 of the crank shaft 220 so that the same polarity to that of the first magnet 310 faces each other approximately in a diagonal direction.

To this end, a bearing supporting portion 213 may be protruded by a predetermined height from the periphery of the upper end of the shaft accommodation hole 212 formed at the cylinder block 210 so as to form a thrust surface and allow insertion of the first magnet 310. Preferably, the bearing supporting portion 213 may be formed so that a height H1 thereof up to its upper surface, namely, a height from a magnet mounted surface 214 on which the first magnet is mounted 310 may not be lower than a height H2 in a radial direction, namely, a thickness of the first magnet 310 from the magnet mounted surface 214, more preferably, be slightly higher than the height H2. Accordingly, the first magnet 310 can be prevented from being collided against the eccentric mass portion 222 of the crank shaft 220. The bearing supporting portion 213 may be formed in an annular shape as shown in the drawing. Alternatively, the bearing supporting portion 213 may be formed in a form of protrusion protruded with a uniform interval along a circumferential direction.

Also, the eccentric mass portion 222 of the crank shaft 220 may be eccentrically formed at an upper end of the shaft portion 221 coupled to the rotor 120. A magnet insertion groove 225 formed in an annular shape in which the second magnet 320 is inserted may be formed at the thrust surface facing the thrust surface of the cylinder block 210.

The magnet insertion groove 225 may have a depth as deep as partially exposing the second magnet 320, namely, a depth in which the second magnet 320 can overlap the first magnet 310 but the first and second magnets 310 and 320 can have the same polarity in the radial direction even when the thrust surfaces of the cylinder block 210 and the crank shaft 220 come in contact with each other. In other words, as shown in FIG. 4, an interval t1 between an upper end of the first magnet 310 and a middle portion of the second magnet 320 is at least not shorter than an interval t2 between the thrust surfaces. Consequently, the generation of the attractive force at the magnet bearing 300 can be prevented beforehand.

The first magnet 310 may be formed in an annular shape having a predetermined diameter, namely, an inner diameter D2 greater than an outer diameter D1 of the bearing supporting portion 213 of the cylinder block 210, and forms a polarity in the shaft direction. That is, as shown in FIG. 4, N-pole is magnetized to an upper side of the first magnet 310 in the shaft direction, S-pole is magnetized to a lower side thereof in the shaft direction

The second magnet 320 may be formed in an annular shape with a diameter as great as overlapping the first magnet 310 outside the first magnet 310, and forms a polarity in the shaft direction to face the same polarity of the first magnet 310. That is, the polarities of the second magnet 320 may be symmetrically opposite polarities to those of the first magnet 310. For instance, as shown in FIG. 4, if the upper side of the first magnet 310 is N-pole, the lower side of the magnet 320 is magnetized to N-pole and the upper side thereof is magnetized to S-pole.

The first magnet 310 and the second magnet 320 may be disposed to overlap each other by a predetermined height in the shaft direction. For example, as shown in FIGS. 3 and 4, an upper end of the first magnet 310 is located higher than a lower end of the second magnet 320, thereby rendering the first and second magnets 310 and 320 overlap each other in the shaft direction. Here, an overlapped distance t3 between the first magnet 310 and the second magnet 320 may preferably be less than a half height of the second magnet 320, namely, have a height at which the upper side polarity of the first magnet 310 does not correspond to the upper side polarity of the second magnet 320 in the radial direction. For example, referring to FIG. 4, the overlapped distance t3 may be approximately in the range of 0.4 to 1.0mm, in which the repulsive force between the magnets 310 and 320 can be maximized.

The first and second magnets 310 and 320 may also preferably be disposed to be slightly spaced apart from each other in the radial direction. For example, as shown in FIG. 3, if an outer diameter D3 of the first magnet 310 is smaller than an inner diameter D2 of the second magnet 320, an interval between the outer diameter D3 of the first magnet 310 and the inner diameter D2 of the second magnet 310, namely, as shown in FIG. 4, an interval t4 between the first magnet 310 and the second magnet 320, may be approximately less than 1.0mm, so as to generate the repulsive force between the first and second magnets 310 and 320 as much as possible.

With such configuration, when the crank shaft 220 is inserted into the shaft accommodation hole 212 of the cylinder block 210, the crank shaft 220 may be slightly raised from the cylinder block 210 due to the repulsive force generated between the first magnet 310 and the second magnet 320, each disposed on the thrust surfaces of the cylinder block 210 and the crank shaft 220.

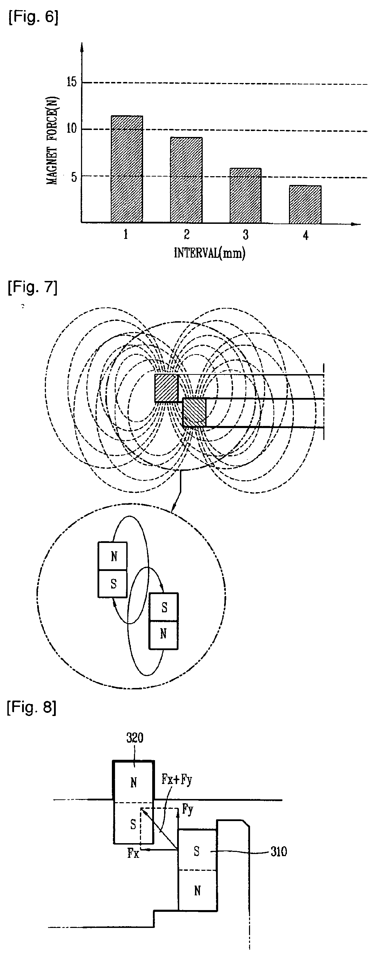

That is, referring to FIG. 7, as the first and second magnets 310 and 320 are disposed so that the same polarity is located at surfaces facing each other in a diagonal direction, the first magnet 310 and the second magnet 320 generate a repulsive force thrusting each other. Accordingly, the crank shaft 220 is pushed away from the cylinder block 210 in the shaft direction so as to be slightly raised, thereby reducing a frictional loss due to a load of the crank shaft 220 in the shaft direction.

Here, referring to FIG. 8, between the first magnet 310 and the second magnet 320, the repulsive force is generated not only in the shaft direction (x-direction) but also in the radial direction (y-direction), resulting in generation of the repulsive force in the diagonal direction as well. Consequently, the crank shaft 220 and the cylinder block 210 can be supported by the magnet bearing 300 in the radial direction as well as in the shaft direction, which enables the reduction of frictional loss due to an eccentric load of the crank shaft 220.

Especially, the first magnet 310 and the second magnet 320 are disposed so as to overlap each other within a preset range, namely, within a range that the same polarities of both the magnets 310 and 320 do not face (correspond to) each other in the radial direction. Accordingly, an increase in an input load caused by the magnetic force between the first magnet 310 and the second magnet 320 can be prevented, which allows further improvement of the energy efficiency of the compressor.

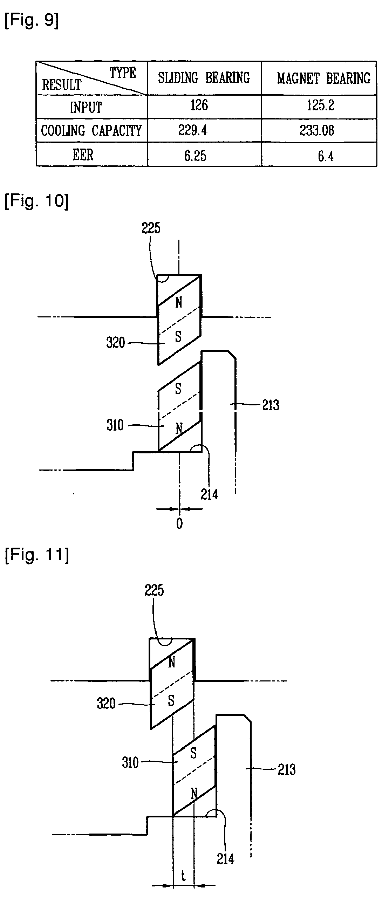

FIG. 9 is a table showing results of comparing input, cooling capacity and energy efficiency between the reciprocating compressor having the magnet bearing according to the present invention and a reciprocating compressor having the related art sliding-contact bearing. As shown in FIG. 9, for reciprocating compressors with the same capacity, if the magnet bearing is employed to support the crank shaft 220 in the radial direction and the shaft direction as shown in the present invention, the input is 125.2W. To the contrary, if the conventional sliding-bearing is employed, the input is 126W. Accordingly, it can be seen that the present invention has been improved even in terms of the input. In addition, a cooling capacity of the present invention is 233.08W while the cooling capacity of the related art is just 229.4W. It can consequently be noticed that an energy efficiency ratio (EER) of the compressor according to the present invention is about 6.4 while that of the related art is about 6.25. That is, the EER of the present invention has been remarkably improved as great as about 0.15, compared to the related art.

### Mode for the Invention

Hereinafter, description will be given of another embodiment of the shapes of first and second magnets configuring the magnet bearing of the reciprocating compressor according to the present invention.

That is, the previous embodiment has illustrated that the first and second magnets have a square section, e.g., a rectangular or perfect square section. However, this embodiment illustrates that first and second magnets 310 and 320 may be formed in a shape having a tilt surface, for example, having a section in a half-trapezoid shape or lozenge shape.

In this case, facing surfaces between the first and second magnets 310 and 320 in the shaft direction may be inclined to be symmetrical about each other. As shown in FIG. 10, the facing surfaces between the first and second nets 310 and 320 in the shaft direction may be located so that their sectional centers in the shaft direction are aligned with each other. Alternatively, as shown in FIG. 11, the magnet bearing 300 may be more preferably disposed so that the sectional centers between the first and second magnets 310 and 320 in the shaft direction have a preset interval t therebetween so as to generate the repulsive force both in the shaft direction and in the radial direction.

Here, this embodiment may be implemented so that the facing surfaces between the first and second magnets 310 and 320 in the shaft direction are inclined with respect to each other and the sectional centers thereof in the shaft direction have the preset interval, which renders the first and second magnets 310 and 320 overlap each other in the shaft direction. Therefore, the structure that the first magnet 310 is inserted into the second magnet 320 or vice versa may not be needed. That is, in this embodiment, since an uppermost point of the first magnet 310 and the lowermost point of the second magnet 320 may be disposed at positions overlapping in the shaft direction, an outer diameter of the first magnet 310 does not have to be smaller than an inner diameter of the second magnet 320. Accordingly, if the diameter of the second magnet 320 is the same to that in the previous embodiment, the diameter of the first magnet 310 can be formed greater than that in the previous embodiment, thereby enhancing the bearing effect. On the other hand, if the diameter of the first magnet 310 is the same to that in the previous embodiment, the diameter of the second magnet 320 may be made to become smaller so as to reduce a material cost for the magnets that much. Other configuration and the thusly obtained operation effects are similar or the same to those in the previous embodiment, so the detailed description thereof will be omitted.

Hereinafter, description will be given of another embodiment in which the magnet bearing for the reciprocating compressor according to the present invention is installed at the thrust surface of the cylinder block 210 and the thrust surface of the crank shaft 220.

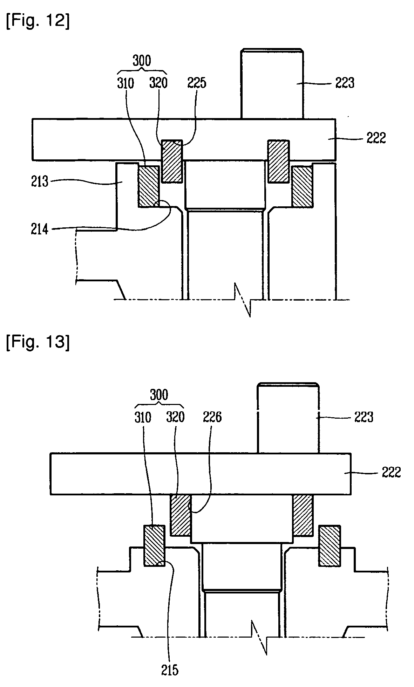

That is, the previous embodiment has illustrated that the bearing supporting portion 213 of the cylinder block 210 is formed at the periphery of the shaft accommodation hole 212, wherein an inner circumferential surface of the first magnet 310 comes in contact with an outer circumferential surface of the shaft accommodation hole 212. However, this embodiment may implement, as shown in FIG. 12, that the bearing supporting portion 213 is formed at an edge of the upper surface of the cylinder block 210 so that an outer circumferential surface of the first magnet 310 is inserted in a contact state with an inner circumferential surface of the bearing supporting portion 213.

Even in this case, the height of the bearing supporting portion 213 may be formed the same to that in the previous embodiment. The magnet insertion groove 225 may be formed at the thrust surface of the crank shaft 220, and the second magnet 320 may be inserted into the magnet insertion groove 225 for coupling. Other basic configuration and the thusly obtained operation effects are similar or the same to those in the previous embodiment, so the detailed description will be omitted.

Here, in this embodiment, since the first magnet 310 is located inside the bearing supporting portion 213, the second magnet 320 is located inside the first magnet 310, namely, at the inner diameter of the first magnet 310. Accordingly, the diameters of the first and second magnets 310 and 320 are shortened, so as to relatively reduce the material cost for the first and second magnets 310 and 320 that much, as compared to the previous embodiment.

As another embodiment, as shown in FIG. 13, a bearing supporting portion 226 may be formed at a lower surface of the eccentric mass portion 222 of the crank shaft 220, and the second magnet 320 may be coupled to the bearing supporting portion 226 so that an inner circumferential surface of the second magnet 320 can come in contact with an outer circumferential surface of the bearing supporting portion 226. Here, a magnet insertion groove 215 formed in an annular shape for allowing the first magnet 310 to be inserted therein may be formed at an upper surface of the bearing supporting portion 226 of the crank shaft 220, namely, at a thrust surface of the cylinder block 210 facing (corresponding to) a thrust surface of the crank shaft 220. Although not shown in the drawing, in this case, an outer circumferential surface of the second magnet 320 may be contacted by an inner circumferential surface of the bearing supporting portion 226.

Even in these cases, the basic configurations, such as the height of the bearing supporting portion 226 or the depth of the magnet insertion groove 215, and the thusly obtained operation effects are similar or the same to those in the previous embodiment, so the detailed description thereof will be omitted.

The magnet bearing of the reciprocating compressor according to the present invention may alternatively be installed at a lower surface of the cylinder block and an upper surface of a rotor corresponding to the lower surface.

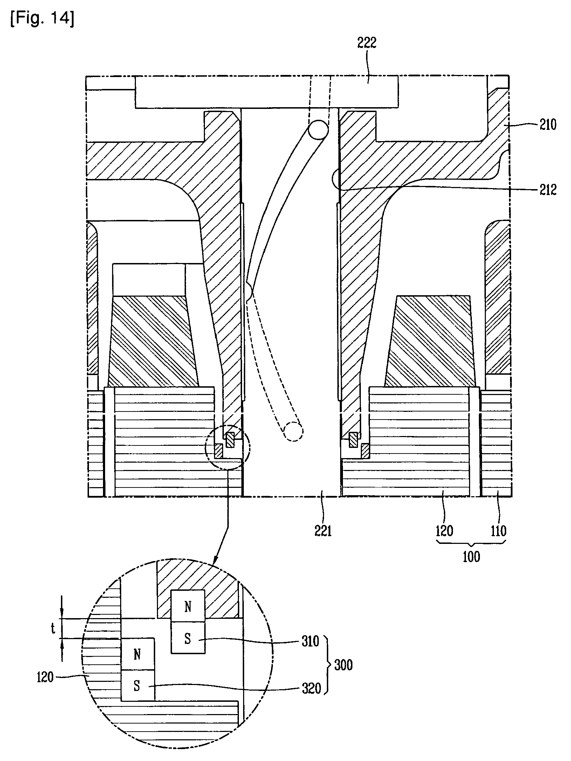

That is, the previous embodiment has illustrated that the first magnet 310 is installed at the thrust surface of the cylinder block 210 while the second magnet 320 is installed at the thrust surface of the crank shaft 220. However, this embodiment illustrates, as shown in FIG. 14, that the first magnet 310 is installed at a lower surface of the cylinder block 210 while the second magnet 320 is installed at an upper surface of the rotor 120 corresponding to the lower surface of the cylinder block 210.

Even in this case, preferably, the first magnet 310 and the second magnet 320 may have different diameters so that sectional centers thereof in the shaft direction can be located with a predetermined gap therebetween. Accordingly, the first and second magnets 310 and 320 may be disposed to be spaced apart from each other by a predetermined gap even in the shaft direction or overlap each other by a predetermined height in the shaft direction. Here, regarding the installation space of the magnet bearing 300 upon assembling the magnet bearing 300, a diameter of the second magnet 320 may preferably be formed greater than that of the first magnet 310.

In this case, the first and second magnets 310 and 320 may preferably be disposed so that their facing surfaces have different polarities, thereby attracting each other. That is, as the rotor 120 and the crank shaft 220 are integrally coupled to each other, the crank shaft 220, namely, the rotor 120 should be pulled up toward the cylinder block 210 in order to reduce the frictional loss between the crank shaft 220 and the cylinder block 120. Accordingly, when the magnet bearing 300 is installed between the rotor 120 and the cylinder block 210, the magnet bearing 300 should be magnetized to generate an attractive force.

As another embodiment, the magnet bearing may be disposed so as to use a repulsive force or an attractive force depending on the structure of the compressor.

That is, as illustrated in the previous embodiments, in case where the compression unit 200 is located above the motor unit 100, if the magnet bearing 300 is installed between the cylinder block 210 and the crank shaft 220, the magnet bearing 300 may use the repulsive force generated between the magnets 310 and 320, while using the attractive force between the two magnets 310 and 320 if the magnet bearing 300 is installed between the rotor 120 and the cylinder block 210.

On the other hand, in case where the compression unit 200 is located below the motor unit 100, if the magnet bearing 300 is installed between the cylinder block 210 and the crank shaft 220, the magnet bearing 300 may use the attractive force generated between the magnets 310 and 320, while using the repulsive force between the two magnets 310 and 320 if the magnet bearing 300 is installed between the rotor 120 and the cylinder block 210.

The basic configuration and the thusly obtained operation effect of this embodiment are similar or the same to those in the previous embodiments, so the detailed description thereof will be omitted.

In the meantime, if the reciprocating compressor according to the present invention is applied to a refrigerating apparatus, the performance of the refrigerating apparatus can be enhanced.

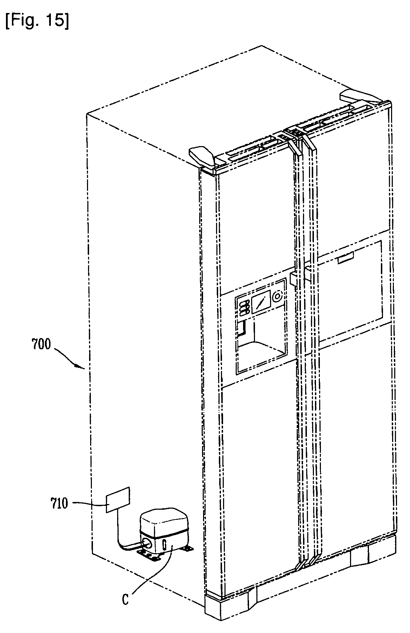

For example, as shown in FIG. 15, inside a refrigerating apparatus 700 having a refrigerant compression type refrigerating cycle including a compressor, a condenser, an expansion apparatus and an evaporator, a reciprocating compressor C in which the magnet bearing 300 without generating a friction is installed at the thrust surfaces as described above may be connected to a main board 710 for controlling an overall operation of the refrigerating apparatus. Also, the magnet bearing 300 of the reciprocating compressor C may be configured so that both magnets facing each other generate a force in the radial direction as well as in the shaft direction, thereby reducing a frictional loss of the crank shaft 220 with respect to the cylinder block 210 not only in the shaft direction but also in the radial direction. Therefore, the refrigerating apparatus having the reciprocating compressor can achieve the effects previously described in association with the reciprocating compressor and additionally enhance its performance.

### Industrial Applicability

In association with the reciprocating compressor and the refrigerating apparatus having the same according to the present invention, a single type reciprocating compressor having a single cylinder has been illustrated; however, in some cases, the present invention can also be applied to a multi-type reciprocating compressor having many cylinders and a refrigerating apparatus having the same.

## Claims

1. A reciprocating compressor comprising:
- a casing having a hermetic inner space;
- a driving motor (100) installed in the inner space of the casing;
- a cylinder block (210) installed in the inner space of the casing together with the driving motor (100), and having a cylinder (211) at one side thereof, a shaft accommodation hole (212) forming a journal bearing surface being formed at one side of the cylinder (211);
- a crank shaft (220) including a shaft portion (221) coupled to a rotor (120) of the driving motor (100) and inserted into the shaft accommodation hole (212) of the cylinder block (210), and a plate-shaped extending portion (222) extending from an outer circumferential surface of the shaft portion (221) to be formed wider than the shaft accommodation hole (212) of the cylinder block (210); and
- a magnet bearing (300) disposed between the cylinder block (210) and the crank shaft (220);
wherein the magnet bearing (300) comprises a first magnet (310) installed at the cylinder block (210), and a second magnet (320) installed at the crank shaft (220) or the rotor (120) of the driving motor (100) to conform with the first magnet (310),
**characterized in that** the magnet bearing (300) allows generation of a force in a shaft direction and a force in a radial direction so that the crank shaft (220) is supported with respect to the cylinder block (210) in the shaft direction and in the radial direction;
**in that** the first magnet (310) and the second magnet (320) are disposed to have a predetermined interval between the center of the section of the first magnet (310) and the center of the section of the second magnet (320) in the shaft direction;
**in that** the first magnet (310) and the second magnet (320) are disposed to have an overlapped distance (t3) with each other in the shaft direction; and
**in that** each of the first magnet (310) and the second magnet (320) is formed in an annular shape, and an outer diameter (D3) of one magnet (310) is smaller than an inner diameter (D2) of another magnet (320).

2. The compressor of claim 1, wherein an overlapped height between the first and second magnets (310, 320) is adjusted by an interval (t2) between a thrust surface of the cylinder block (210) and a thrust surface of the crank shaft (220).

3. The compressor of claim 1, wherein a magnet insertion groove (215, 225) in which the first magnet (310) or the second magnet (320) is inserted is formed at at least one of the thrust surface of the cylinder block (210) or the corresponding thrust surface of the crank shaft (220).

4. The compressor of claim 3, wherein the magnet insertion groove (215, 225) is not deeper than the height of the magnet (310, 320) in the shaft direction, the magnet (310, 320) being inserted into the magnet insertion groove (215, 225).

5. The compressor of claim 1, wherein a bearing supporting portion (213) protruded from a periphery of the shaft accommodation hole (212) of the cylinder block (210) by a predetermined height so that an upper surface thereof forms a thrust surface, an inner circumferential surface of the first magnet (310) coming in contact with an outer circumferential surface of the bearing supporting portion (213).

6. The compressor of claim 5, wherein the thrust surface of the bearing supporting portion (213) is not lower than an upper surface of the first magnet (310).

7. The compressor of claim 5, wherein a magnet insertion groove (225) in which the second magnet (320) is inserted is formed at the thrust surface of the plate-shaped extending portion (222) of the crank shaft (220), the magnet insertion groove (225) being deep enough that the second magnet (320) overlaps the first magnet (310) in the shaft direction.

8. The compressor of any one of claims 1 to 7, wherein the first magnet (310) and the second magnet (320) are magnetized so that polarities thereof are symmetrical in the shaft direction; and
wherein an interval (t1) between an upper end of the first magnet (310) and a middle portion of the second magnet (320) is larger than or equal to an interval (t2) between thrust surfaces of the cylinder block (210) and the plate-shaped extending portion (222).

9. The compressor of claim 8, wherein the first magnet (310) and the second magnet (320) are disposed to locate the same polarity in the radial direction when the thrust surface of the cylinder block (210) comes in contact with the thrust surface of the crank shaft (220).

10. The compressor of claim 1, wherein the first magnet (310) and the second magnet (320) are formed in a shape having a rectangular or perfect square section.

11. The compressor of claim 1, wherein the first magnet (310) and the second magnet (320) are inclined so that facing surfaces thereof in the shaft direction are symmetrical about each other in the shaft direction.

12. A refrigerating apparatus comprising:
- a compressor (c);
- a condenser connected to a discharge side of the compressor (c);
- an expansion apparatus connected to the condenser; and
- an evaporator connected to the expansion apparatus and to a suction side of the compressor (c),
wherein the compressor (c) is a compressor according to any one of claims 1 to 11.

## Patentansprüche

1. Kolbenkompressor, der Folgendes umfasst:
- ein Gehäuse, das einen abgedichteten Innenraum aufweist;
- einen Antriebsmotor (100), der in dem Innenraum des Gehäuses installiert ist;
- einen Zylinderblock (210), der in dem Innenraum des Gehäuses zusammen mit dem Antriebsmotor (100) installiert ist und auf einer Seite davon einen Zylinder (211) aufweist, wobei auf einer Seite des Zylinders (211) ein Wellenaufnahmeloch (212) ausgebildet ist, das eine Zapfenlagerfläche bildet;
- eine Kurbelwelle (220), die einen Wellenabschnitt (221), der mit einem Rotor (120) des Antriebsmotors (100) verbunden ist und der in das Wellenaufnahmeloch (212) des Zylinderblocks (210) eingefügt ist, und einen plattenförmigen Erweiterungsabschnitt (222) enthält, der sich von einer Außenumfangsfläche des Wellenabschnitts (221) erstreckt, derart, dass er breiter als das Wellenaufnahmeloch (212) des Zylinderblocks (210) ausgebildet ist; und
- ein Magnetlager (300), das zwischen dem Zylinderblock (210) und der Kurbelwelle (220) angeordnet ist;
wobei das Magnetlager (300) einen ersten Magneten (310), der am Zylinderblock (210) installiert ist, und einen zweiten Magneten (320), der an der Kurbelwelle (220) oder am Rotor des Antriebsmotors (100) derart installiert ist, dass er dem ersten Magneten entspricht, umfasst,
**dadurch gekennzeichnet, dass** das Magnetlager (300) das Erzeugen einer Kraft in einer Wellenrichtung und einer Kraft in einer radialen Richtung ermöglicht, derart, dass die Kurbelwelle (220) in Bezug auf den Zylinderblock (210) in Wellenrichtung und in der radialen Richtung getragen wird;
dass der erste Magnet (310) und der zweite Magnet (320) derart angeordnet sind, dass sie in Wellenrichtung einen vorgegebenen Abstand zwischen der Mitte des Feldes des ersten Magneten (310) und der Mitte des Feldes des zweiten Magneten (320) aufweisen;
dass der erste Magnet (310) und der zweite Magnet (320) derart angeordnet sind, dass sie in Wellenrichtung eine miteinander überlappende Strecke (t3) aufweisen; und
dass sowohl der erste Magnet (310) als auch der zweite Magnet (320 in ringförmig ausgebildet ist und dass ein Außendurchmesser (D3) eines Magneten (310) kleiner als ein Innendurchmesser (D2) des anderen Magneten (320) ist.

2. Kompressor nach Anspruch 1, wobei eine überlappende Höhe zwischen dem ersten und dem zweiten Magneten (310, 320) durch einen Abstand (t2) zwischen einer Anlauffläche des Zylinderblocks (210) und einer Anlauffläche der Kurbelwelle (220) eingestellt wird.

3. Kompressor nach Anspruch 1, wobei eine Magneteinschubfuge (215, 225), in die der erste Magnet (310) oder der zweite Magnet (320) eingefügt ist, auf der Anlauffläche des Zylinderblocks (210) und/oder der entsprechenden Anlauffläche der Kurbelwelle (220) ausgebildet ist.

4. Kompressor nach Anspruch 3, wobei die Magneteinschubfuge (215, 225) in Wellenrichtung nicht tiefer als die Höhe des Magneten (310, 320) ist, wobei der Magnet (310, 320) in die Magneteinschubfuge (215, 225) eingefügt ist.

5. Kompressor nach Anspruch 1, wobei ein Lagertragabschnitt (213) von einer Umfangsfläche des Wellenaufnahmelochs (212) des Zylinderblocks um eine vorgegebene Höhe derart vorsteht, dass eine Oberseite davon eine Anlauffläche bildet, wobei eine Innenumfangsfläche des ersten Magneten (310) mit einer Außenumfangsfläche des Lagertragabschnitts (213) in Kontakt kommt.

6. Kompressor nach Anspruch 5, wobei die Anlauffläche des Lagertragabschnitts (213) nicht niedriger als eine Oberseite des ersten Magneten (310) ist.

7. Kompressor nach Anspruch 5, wobei eine Magneteinschubfuge (225), in die der zweite Magnet (320) eingefügt ist, an der Anlauffläche des plattenförmigen Erweiterungsabschnitts (222) der Kurbelwelle (220) ausgebildet ist, wobei die Magneteinschubfuge (225) tief genug ist, damit der zweite Magnet (320) mit dem ersten Magneten (310) in Wellenrichtung überlappt.

8. Kompressor nach einem der Ansprüche 1 bis 7, wobei der erste Magnet (310) und der zweite Magnet (320) derart magnetisiert sind, dass ihre Polaritäten in Wellenrichtung symmetrisch sind; und
wobei ein Abstand (t1) zwischen einem oberen Ende des ersten Magneten (310) und einem Mittelabschnitt des zweiten Magneten (320) größer oder gleich einem Abstand (t2) zwischen den Anlaufflächen des Zylinderblocks (210) und des plattenförmigen Erweiterungsabschnitts (222) ist.

9. Kompressor nach Anspruch 8, wobei der erste Magnet (310) und der zweite Magnet (320) derart angeordnet sind, dass in der radialen Richtung dieselbe Polarität besteht, wenn die Anlauffläche des Zylinderblocks (210) mit der Anlauffläche der Kurbelwelle (220) in Kontakt kommt.

10. Kompressor nach Anspruch 1, wobei der erste Magnet (310) und der zweite Magnet (320) in einer Form ausgebildet sind, die einen rechteckigen oder einen perfekt quadratischen Abschnitt aufweist.

11. Kompressor nach Anspruch 1, wobei der erste Magnet (310) und der zweite Magnet (320) derart geneigt sind, dass ihre einander in Wellenrichtung zugewandten Flächen in Wellenrichtung zueinander symmetrisch sind.

12. Kühlvorrichtung, die Folgendes umfasst:
- einen Kompressor (c);
- einen Verflüssiger, der auf einer Ausstoßseite des Kompressors (c) verbunden ist;
- eine Ausdehnungsvorrichtung, die mit dem Verflüssiger verbunden ist; und
- einen Verdampfer, der mit der Ausdehnungsvorrichtung und mit einer Ansaugseite des Kompressors (c) verbunden ist,
wobei der Kompressor (c) ein Kompressor nach einem der Ansprüche 1 bis 11 ist.

## Revendications

1. Compresseur alternatif comprenant :
- un carter ayant un espace intérieur hermétique ;
- un moteur d'entraînement (100) installé dans l'espace intérieur du carter ;
- un bloc à cylindre (210) installé dans l'espace intérieur du carter ensemble avec le moteur d'entraînement (100), et ayant un cylindre (211) sur un de ses côtés, un trou de réception d'arbre (212) formant une surface de palier lisse formé sur un côté du cylindre (211) ;
- un vilebrequin (220) incluant une portion d'arbre (221) couplée à un rotor (120) du moteur d'entraînement (100) et insérée dans le trou de réception d'arbre (212) du bloc à cylindre (210), et une portion en extension en forme de plaque (222) s'étendant depuis une surface circonférentielle extérieure de la portion d'arbre (221) pour être formée plus large que le trou de réception d'arbre (212) du bloc à cylindre (210) ; et
- un palier magnétique (300) disposé entre le bloc à cylindre (210) et le vilebrequin (220) ;
dans lequel le palier magnétique (300) comprend un premier aimant (310) installé sur le bloc à cylindre (210), et un second aimant (320) installé sur le vilebrequin (220) ou sur le rotor (120) du moteur d'entraînement (100) de manière à se conformer au premier aimant (310),
**caractérisé en ce que** le palier magnétique (300) permet la génération d'une force dans la direction de l'arbre et d'une force dans une direction radiale de telle façon que le vilebrequin (220) est supporté par rapport au bloc à cylindre (210) dans la direction de l'arbre et dans la direction radiale ;
**en ce que** le premier aimant (310) et le second aimant (320) sont disposés de manière à présenter un intervalle prédéterminé entre le centre de la section du premier aimant (310) et le centre de la section du second aimant (320) dans la direction de l'arbre ;
**en ce que** le premier aimant (310) et le second aimant (320) sont disposés de manière à présenter une distance de chevauchement (t3) l'un avec l'autre dans la direction de l'arbre ; et
**en ce que** chacun du premier aimant (310) et du second aimant (320) est formé dans une forme annulaire, et un diamètre extérieur (D3) d'un aimant (310) est plus petit qu'un diamètre intérieur (D2) d'un autre aimant (320).

2. Compresseur selon la revendication 1, dans lequel une hauteur de chevauchement entre le premier et le second aimant (310, 320) est ajustée par un intervalle (t2) entre une surface de poussée du bloc à cylindre (210) et une surface de poussée du vilebrequin (220).

3. Compresseur selon la revendication 1, dans lequel une gorge d'insertion d'aimant (215, 225), dans laquelle le premier aimant (310) ou le second aimant (320) est inséré, est formée sur au moins une surface parmi la surface de poussée du bloc à cylindre (210) ou la surface de poussée correspondante du vilebrequin (220).

4. Compresseur selon la revendication 3, dans lequel la gorge d'insertion d'aimant (215, 225) n'est pas plus profonde que la hauteur de l'aimant (310, 320) dans la direction de l'arbre, l'aimant (310, 320) étant inséré dans la gorge d'insertion d'aimant (215, 225).

5. Compresseur selon la revendication 1, dans lequel une portion de support de palier (213) est en projection depuis une périphérie du trou de réception d'arbre (212) du bloc à cylindre (210) sur une hauteur prédéterminée de telle façon qu'une surface supérieure de celle-ci forme une surface de poussée, une surface circonférentielle intérieure du premier aimant (310) venant en contact avec une surface circonférentielle extérieure de la portion de support de palier (213).

6. Compresseur selon la revendication 5, dans lequel la surface de poussée de la portion de support de palier (213) n'est pas plus bas qu'une surface supérieure du premier aimant (310).

7. Compresseur selon la revendication 5, dans lequel une gorge d'insertion d'aimant (225) dans laquelle le second aimant (320) est inséré est formée au niveau de la surface de poussée de la portion en extension en forme de plaque (222) du vilebrequin (220), la gorge d'insertion d'aimant (225) étant suffisamment profonde pour que le second aimant (320) chevauche le premier aimant (310) dans la direction de l'arbre.

8. Compresseur selon l'une quelconque des revendications 1 à 7, dans lequel le premier aimant (310) et le second aimant (320) sont aimantés de telle façon que leurs polarités sont symétriques dans la direction de l'arbre ; et
dans lequel un intervalle (t1) entre une extrémité supérieure du premier aimant (310) et une portion médiane du second aimant (320) est supérieur ou égal à un intervalle (d2) entre les surfaces de poussée du bloc à cylindre (210) et de la portion en extension en forme de plaque (222).

9. Compresseur selon la revendication 8, dans lequel le premier aimant (310) et le second aimant (320) sont disposés de manière à placer la même polarité dans la direction radiale quand la surface de poussée du bloc à cylindre (210) vient en contact avec la surface de poussée du vilebrequin (220).

10. Compresseur selon la revendication, dans lequel le premier aimant (310) et le second aimant (320) sont formés sous une forme ayant une section rectangulaire ou une section carrée parfaite.

11. Compresseur selon la revendication 1, dans lequel le premier aimant (310) et le second aimant (320) sont inclinés de telle façon que leurs surfaces qui font face dans la direction de l'arbre sont symétriques l'une par rapport à l'autre dans la direction de l'arbre.

12. Appareil de réfrigération comprenant :
- un compresseur (c) ;
- un condenseur connecté à un côté décharge du compresseur (c) ;
- un appareil d'expansion connecté au condenseur ; et
- un évaporateur connecté à l'appareil d'expansion et à un côté succion du compresseur (c),
dans lequel le compresseur (c) est un compresseur selon l'une quelconque des revendications 1 à 11.
